# EUROPÄISCHE PATENTSCHRIFT

(11) **EP 0 890 467 B1**
(45) Veröffentlichungstag und Bekanntmachung des Hinweises auf die Patenterteilung: **02.10.2002**
(21) Anmeldenummer: 98112337.5
(22) Anmeldetag: 03.07.1998
(51) Int. Cl.: B60J 10/06, F41H 5/26

(54) **Türrahmen mit einer mehrschichtigen Türscheibe aus Panzerglas eines gepanzerten Sonderschutzfahrzeuges**
Door frame with laminated armoured glass for a specially protected armoured vehicle
Cadre de porte comportant une vitre blindée et laminée pour un véhicule blindé à protection spéciale

(30) Priorität: 12.07.1997 DE 19729897
(43) Veröffentlichungstag der Anmeldung: 13.01.1999
(73) Patentinhaber: DaimlerChrysler AG, 70567 Stuttgart (DE)
(72) Erfinder: Beschle, Klaus, 71139 Ehningen (DE); Jauss, Christian, 71034 Böblingen (DE); Krück, Peter, 71034 Böblingen (DE); Ludwig, Sascha, 72764 Reutlingen (DE); Uhlenberg, Jürgen, 71120 Grafenau (DE)

(56) Entgegenhaltungen:
- DE-A- 4 142 416
- DE-A- 4 335 336
- DE-A- 4 415 879
- FR-A- 2 681 819

## Beschreibung

Die Erfindung betrifft einen Türrahmen mit einer mehrschichtigen Türscheibe aus Panzerglas eines gepanzerten Sonderschutzfahrzeuges nach dem Oberbegriff des einzigen Patentanspruchs.

Der DE 44 15 879 C2 ist ein solcher Türrahmen eines gepanzerten Sonderschutzfahrzeuges als bekannt zu entnehmen, welcher ein rahmenverstärkendes, den Türspalt abdeckendes und gegen Durchschuß sicherndes Profilelement sowie eine mehrschichtige, an dem Rand der äußeren Schicht in dem Türrahmen gefaßten Panzerglasscheibe umfasst. Durch die Lagerung der mehrschichtigen Türscheibe ausschließlich an dem überragenden Rand der äußeren Scheibenschicht bricht dieser Rand bei einer kräftigen Belastung, wie zum Beispiel Gewalteinwirkung oder Druckwellen der Scheibe ab. Dies kann in Kauf genommen werden, da die Türscheibe mit ihrer inneren Scheibenschicht an einem gepanzerten Rahmenteil anliegt, durch das eine an der Außenschicht aus ihrer Halterung ausgebrochene Scheibe nicht in das Wageninnere eindringen kann. Der Grund für eine Lagerung einer mehrschichtigen Panzerglasscheibe an lediglich dem überragenden Rand ihrer äußeren Scheibenschicht besteht darin, dass auf diese Weise für eine Panzerglasscheibe eine Rahmeneinfassung einer einschichtigen einfachen Fensterglasscheibe eines Serienfahrzeuges verwendet werden kann.

Bei einer derart eingerahmten Türscheibe besteht das Problem, dass diese Türscheibe insbesondere nach einer Druckwelle, das heißt bei abgebrochenem Randbereich, nach außen aus dem Rahmen herausfallen kann.

Aufgabe der Erfindung ist es daher, ein Türrahmen nach dem Oberbegriff des Patentanspruchs zu schaffen, bei dem auch bei abgebrochenem Randbereich ein Herausfallen der Türscheibe nach außen aus dem Rahmen vermieden werden kann.

Diese Aufgabe wird erfindungsgemäß durch die im Patentanspruch angegebene Merkmalskombination gelöst.

Die Erfindung beruht auf dem Gedanken, einer nach der erwähnten Gewalteinwirkung aus ihrer üblichen Verankerung gerissenen Scheibe einen Nothalt gegen ein Herausfallen nach außen zu geben.

Soweit es aus EP 0 376 450 A2 und DE 3 733 229 A1 bekannt ist, zweischichtige Fensterglasscheiben eines Fahrzeuges in einer randseitigen Nut zwischen den zwei Glasschichten in einem Türrahmen zu führen, betreffen diese Ausführungen nicht das erfindungsgemäße Problem, einer aus ihrer Halterung gerissenen Panzerglasscheibe einen Nothalt gegen ein Herausfallen aus dem Türrahmen zu geben.

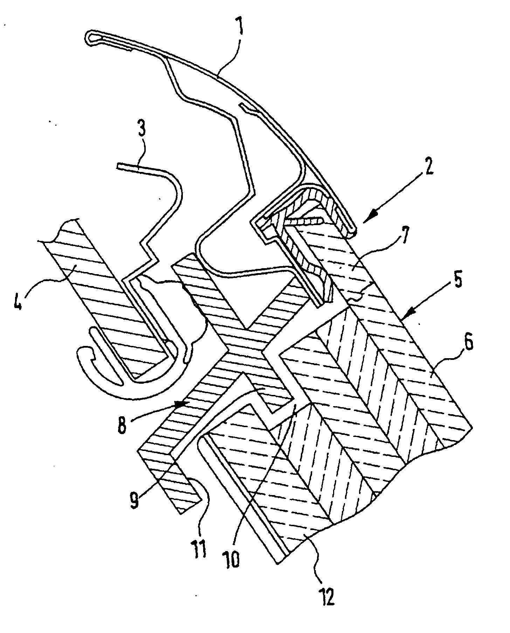

Ein Ausführungsbeispiel der Erfindung ist in der Zeichnung dargestellt.

Diese zeigt einen Schnitt durch den dachseitigen Bereich eines Türrahmens einer gepanzerten Kraftfahrzeugtür.

In dem Türrahmen 1 einer Tür 2 eines gepanzerten Sonderschutzfahrzeugs ist ein mehrschichtiges Panzerglas als Türscheibe 5 mit einer gestuften Außenkontur eingefaßt.

Der in der Zeichnung dargestellte obere Teil des Türrahmens schließt gegen die Dachpartie 3 des gepanzerten Fahrzeuges ab.

In dem karosserieseitigen Rahmenteil für die Tür 2 ist an der Fahrzeuginnenseite eine Panzerplatte 4 angebracht.

Die Türscheibe 5 ist aus Panzerglas und besteht aus mehreren einzelnen Scheibenschichten. In dem gezeichneten Ausführungsbeispiel ist die Türscheibe 5 aus insgesamt fünf Schichten aufgebaut. Die äußere Türscheibenschicht 6 besitzt einen überragenden Rand 7, an dem die gesamte Türscheibe innerhalb des Türrahmens 1 gefaßt ist. Durch diese Art der Fassung der Türscheibe 5 kann eine übliche serienmäßige Rahmeneinfassung verwendet werden.

Der Türrahmen 1 besitzt innerhalb des Spaltes zwischen sich und der Dachpartie 3 der Karosserie eine gepanzerte Steg-Einrichtung 8, durch die in erster Linie ein Durchschuß eines Projektiles durch den Spalt hindurch in das Fahrzeuginnere in an sich bekannter Weise verhindert werden soll.

An diese Steg-Einrichtung 8 ist ein in der Richtung der Ebene der Türscheibe 5 in diese Türscheibe auskragender Steg 9 angeformt. Dieser Steg 9 ragt in eine Aussparung 10 am Rand der Türscheibe 5, wobei diese Aussparung 10 von einer rückspringenden Scheiben-Zwischenschicht gebildet ist.

Die Steg-Einrichtung 8 besitzt an ihrem dem Fahrzeuginneren zugewandten Ende ein Auflager 11 für die innere Scheibenschicht 12.

Im Falle einer heftigen Druckeinwirkung der Türscheibe 5 bricht der Rand 7 der äußeren Scheibenschicht 6 gewöhnlich im Bereich der in der Zeichnung eingetragenen Wellenlinie ab. In diesem Fall wird die Fensterscheibe 5 an dem Auflager 11 aufgefangen und dadurch vor einem Eindringen in das Wageninnere gehindert. Der Steg 9 hat allein die Aufgabe, dafür zu sorgen, daß die Fensterscheibe 5, insbesondere bedingt durch einen auf eine Druckwelle folgenden Unterdruck, nicht nach außen aus dem Türrahmen herausfallen kann.

## Patentansprüche

1. Türrahmen eines gepanzerten Sonderschutzfahrzeuges mit einem rahmenverstärkenden, den Türspalt abdeckenden und gegen Durchschuß sichernden Profilelement (8) und einer mehrschichtigen, an dem Rand der äußeren Schicht (6) in dem Türrahmen (1) gefaßten Panzerglasscheibe (5),
**dadurch gekennzeichnet,**
**dass** diese Panzerglasscheibe (5)randseitig zwischen der inneren und der äußeren Scheibenschicht (12 bzw. 6) eine Nut (10) aufweist, in die ein vom Profilelement (8) in Richtung der Türscheibenebene auskragender Steg (9) eingreift.

## Claims

1. Door frame of an armoured special protection vehicle with a frame strengthening profiled element (8) covering the crack of the door and ensuring that a bullet does not pass right through and a multilayer bulletproof glass pane (5) held on the edge of the outer layer (6) in the door frame (1)
**characterised in that**
this bulletproof glass pane (5) has on its edge between the inner and the outer layer of the pane (12 and 6 respectively) a groove (10), in which a web (9) projecting from the profiled element (8) in the direction of the plane of the door window pane engages.

## Revendications

1. Cadre de portière d'un véhicule blindé à protection spéciale comportant un élément profilé (8) qui renforce le cadre, recouvre la fente de portière et fournit une protection contre un passage de coup de feu à travers elle, et une vitre blindée en verre (5) à couches multiples, qui est saisie au niveau du bord de la couche extérieure (6) dans le cadre de portière (1), **caractérisé en ce que** cette vitre blindée (5) comporte, au niveau du bord, entre la couche intérieure et la couche extérieure (12 ou 6) de la vitre une rainure (10), dans laquelle s'engage une nervure (9) qui s'étend en porte-à-faux à partir de l'élément profilé (8) dans la direction du plan de la vitre de portière.
